# EUROPEAN PATENT SPECIFICATION

(11) **EP 1 868 728 B1**
(45) Date of publication and mention of the grant of the patent: **28.12.2011**
(21) Application number: 06738688.8
(22) Date of filing: 16.03.2006
(51) Int. Cl.: B60G 9/04

(54) **AXLE TOWER**
ACHSENTURM
AFFUT DE PONT

(30) Priority: 16.03.2005 US 662233 P; 15.03.2006 US 375247
(43) Date of publication of application: 26.12.2007
(73) Proprietor: Hendrickson USA, L.L.C., Itasca, IL 60143 (US)
(72) Inventor: LEDEN, Nathan, M., Lemont, Illinois 60439 (US); HOLUM, Richard, S., Shorewood, Illinois 60431 (US); VOGLER, Richard, G., Naperville, Illinois 60565 (US); BRANNIGAN, Michael, Woodridge, Illinois 60517-4904 (US); DUDDING, Ashley, T., Yorkville, Illinois 60560 (US)
(74) Representative: Stoner, Gerard Patrick
(86) International application number: PCT/US2006/009655
(87) International publication number: WO 2006/102041

(56) References cited:
- US-A- 5 112 078
- US-A- 5 458 359
- US-B2- 6 527 286
- US-B2- 6 793 225

## Description

### BACKGROUND OF THE INVENTION

The present invention is directed to devices for attaching a suspension system component such as an axle alignment device and/or a load reacting mechanism to the axle housing. In particular, the present invention is directed to axle towers which attach a multifunctional axle aligning and/or load reacting device such as a torque box to the axle housing.

The suspension system of a vehicle provides a comfortable ride for the passenger(s) of the vehicle and protects cargo that the vehicle may be carrying from excessive vibration. Equally, if not more importantly, the suspension system also provides stability to the vehicle by controlling various forces acting on the axle which would otherwise cause an unwanted change in the position of the axle relative to the vehicle frame. Specifically, such forces operate to alter the vertical, lateral, and/or longitudinal position of the axle in relation to the vehicle frame and also can cause axle movement such as roll, yaw, and wind-up. Each of the components of the suspension system reacts and controls one or more of the forces. In order to reduce the complexity and weight of the suspension system, components of the suspension system are being designed to control multiple forces.

A torque box assembly is one such multifunctional component. It reacts to vertical air spring loads, resists braking / acceleration loads, acts as the core roll resisting feature, resists cornering or lateral loading and maintains axle location in relation to the frame rails and also helps to prevent undue yaw and axle wind-up.

In general, the torque box assembly typically comprises a welded steel rectangular box structure. The front and rear ends are welded to round steel tubes. Upon assembly, bonded rubber bushes are inserted into these tubes and round metal rods are placed in the bushings. On one end of the torque box, the rod is connected to a cross member which spans between the frame rails of the vehicle frame. On the opposite end of the torque box, each end of the inner round metal rod is in turn attached to an axle tower linking the torque box to the axle through the axle housing. Further details of a torque box assembly are disclosed in U.S. Patent No. 6,527,286. This disclosure forms the pre-characterizing portion of the independent claims.

Clearly, the load path between the axle housing and the torque box is of major import. Attachment devices or axle towers as referred to herein are intended to provide a means of transferring these loads onto the axle housing. These axle towers transfer longitudinal, roll input, lateral and vertical loads. Preferably, the axle towers are capable of this load transfer without overloading and/or fracturing the axle housing.

Asymmetrical axles are the standard in North America. Asymmetrical refers to the fact that the differential housing is offset from the centerline of the axle. Asymmetrical axles present challenges in designing attachment devices that attach axle alignment devices and/or load reacting devices such as torque boxes to the axle housing. The torque box or other device is typically centered between the frame rails of a vehicle and accordingly centered between the opposite ends of the axle. In order to center the torque box or other device, the attachment devices such as axle towers are spaced apart an equal distance from the centerline of the axle. Consequently, since the differential housing is not centered on the axle, the axle towers are typically mounted to the differential housing at different distances from the either side of the centerline of the differential housing. In other words the axle towers are mounted at asymmetric points about the centerline of the differential housing such that a chord connecting the attachment points is not horizontal.

As such, axle towers are typically designed differently from each other to accommodate their asymmetric positioning about the differential housing. Besides having different base configurations due to accommodate the mounting position on the differential housing, the axle towers are also of differing heights in order to maintain the transverse extent of the torque box parallel to the axle at rest. In other words, since one axle tower may be placed at a more elevated position on the differential housing than the other axle tower, that elevated axle tower will shorter than the other axle tower otherwise the torque box will be skewed relative to the axle at rest.

The axle towers have to being able to withstand the stress forces exerted by the torque box or other such devices, the axle towers have to be able to absorb and/or disperse the forces along the axle housing in order to prevent possible failure of the axle and/or differential housings.

Other attachment devices known in the art are perhaps longitudinal and transverse torque rod towers encountered on most on highway suspensions or the tower which connects a "vee rod" to the top of the axle housing. However, these devices are not intended to be multifunctional in nature as is the case with the axle towers of the present invention. The axle towers of the present invention are unique in that they are multifaceted, multifunctional structural components, i.e. structures that react to loads on multiple axes, whereas existing devices are one dimensional in their function, i.e. structures that react to loads on a single axis. In order to provide the functions listed above, several features which are improvements over prior art structures can be included in the axle towers of the present invention.

As will be explained in more detail below, the torque box is in tension and reacts by pulling on the axle towers when a vertical load is applied to the air springs. Due to this cantilevered load into the axle towers, there is a compression side (closest to the torque box) and a tension side (furthest from the torque box) on the axle towers. These two sides of the axle towers therefore can be designed differently to provide an efficient design capable of carrying the loads.

In one embodiment of the axle towers of the present invention, the axle towers can include several features. While these features will be discussed in greater detail below, they are summarize as follows. One feature that may be included is that the compression side of the axle tower differs in shape from tension side of tower. The differing shapes affect the stiffness of each side of the tower and improve the stress distribution and reduce the stress load on the axle housing One difference in the shape in the tower sides is that the side of axle tower that experiences higher compression forces is scalloped or contoured to a greater extent than the other side or tension side of the axle tower.

Another feature that may be included is that slot of the internal connecting plate is asymmetrically shaped. The asymmetry addresses the concentration of stress on one side of the slot through the concentration of material to offset the higher stress level. In other words, there is more material on the side that experiences greater stress forces.

A further feature that can be included is an asymmetrical foot print attaching the axle towers to axle housing. The compression side of the axle tower or the side with the greater degree of cutout or curvature has at least one radiused or rounded corner. The rounded or radiused foot print radius on the compression side of the axle tower attenuates the effects of a sharp corner on the axle housing by distributing the stress load. In addition, the foot print has a sizable extent along the axle housing. This helps to disperse the stress along a larger area of the axle and differential housing.

Yet another feature that may be included is that the scalloping or contouring of the axle tower on the compression side allows it to flex and comply as the axle deforms under load without overloading attaching welds. A structure having no scalloping or contouring would be stiffer and would not flex as the axle distorts which could overload the welds

Yet another feature may be weldment of the axle towers. Weldment is lighter, more cost efficient and may be preferable over common steel casting. In addition, weldment does not require subsequent machining as a casting would. However, the axle tower could be manufactured in casting form versus the fabrication described herein without departing from the scope of the invention. The axle towers of the present invention could also be altered to serve as torque rod attachments.

### SUMMARY OF THE INVENTION

In one aspect of the present invention (claim 1) an axle tower is provided for attaching a vehicle suspension component to a vehicle axle having a centerline. The axle tower comprises a compression side plate disposed generally parallel to a tension side plate with each of the compression and tension side plates having upper and lower portions. Each of the upper and lower portions of the compression and tension side plates has a proximate edge positioned closer to the centerline than a distal edge. First and second appendages extend from the distal edges of the lower portions of the compression and tension side plates, respectively and third and fourth appendages extend from the proximate edges of the lower portions of the compression and tension side plates, respectively. The proximate and distal edges of the lower portions of the compression and tension side plates have an arcuate portion. An inner plate joins and is positioned perpendicular to the compression and tension side plates. The inner plate has upper and lower portions and the upper portion of the inner plate has a slot for attaching the axle tower to the vehicle suspension component.

In another aspect of the present invention (claim 8), a mounting assembly is provided for mounting a suspension component to an asymmetrical axle that includes a differential housing having a centerline. The mounting assembly comprises first and second axle towers mounted to the asymmetrical axle on opposite sides of the centerline, respectively. The first and second axle towers each comprises compression and tension side plates disposed parallel to each other and each of the compression and tension side plates has upper and lower portions. Each of the upper and lower portions includes a proximate edge facing towards the centerline and a distal edge facing away from the centerline. First and second appendages extend from the distal edges of the lower portions of the compression and tension side plates, respectively, and third and fourth appendages extend from the proximate edges of the lower portions of the compression and tension side plates, respectively. An inner plate joins the compression and tension side plates and is positioned perpendicular to the compression and tension side plates. Each of the inner plates has a slot for attaching the first and second axle towers to the vehicle suspension component and each of the slots is spaced an equal distance from a center of the axle.

In yet another aspect of the invention (claim 16), a suspension system for supporting a vehicle chassis that includes transversely spaced longitudinally extending first and second frame rails over a transversely extending axle that includes a centerline is provided. The suspension system comprises a cross member extending transversely between and connected to the first and second frame rails; and a multifunctional suspension component connected at one end to the cross member and connected at another end to first and second axle towers. The first and second axle towers are transversely spaced apart and fixed to the axle at opposite sides of the centerline. The first and second axle towers each comprises compression and tension side plates longitudinally spaced from and parallel to each other. Each of the compression and tension side plates has upper and lower portions and each of the upper and lower portions has a proximate edge facing towards the centerline and a distal edge facing away from the centerline. First and second appendages extend from the distal edges of the lower portions of the compression and tension side plates, respectively and third and fourth appendages extend from the proximate edges of the lower portions of the compression and tension side plates, respectively. An inner plate joins the compression and tension side plates and is positioned perpendicular to the compression and tension side plates. Each of the inner plates has a slot for attaching the first and second axle tower to the multifunctional suspension component. The slots of the first and second axle towers are equally spaced from the centerline.

### BRIEF DESCRIPTION OF THE DRAWINGS

FIG. 1 is a perspective view of a suspension system of the present invention mounting a vehicle frame over a tandem axle.

FIG. 2A is an elevation view of the leading arm asymmetrical axle of the tandem axle shown in FIG. 1 having two axle towers of the present invention mounted thereon.

FIG. 2B is an elevation view of the trailing arm asymmetrical axle of the tandem axle shown in FIG. 1 having two axle towers of the present invention mounted thereon.

FIG. 3 is a side elevation view of the leading arm axle shown in FIG. 2A.

FIG. 4A is a perspective view of one embodiment of an axle tower of the present invention.

FIG. 4B is a perspective view of another embodiment of an axle tower of the present invention.

FIG. 5A is an elevation view of the axle tower shown in FIG. 4A.

FIG. 5B is an elevation view of the axle tower shown in FIG. 4B.

FIG. 6 is a cross-sectional view taken at line 6-6 of FIG. 5A.

FIG. 7 is a cross-sectional view taken at line 7-7 of FIG. 5B.

FIG. 8A is an elevation view of the side plate of the axle tower shown in 5A that experiences tension.

FIG. 8B is an elevation view of the side plate of the axle tower shown in 5A that experiences compression and having an unbent appendage.

FIG. 9A is an elevation view of the side plate of the axle tower shown in 5B that experiences tension.

FIG. 9B is an elevation view of the side plate of the axle tower shown in 5B that experiences compression and having an unbent appendage.

FIG. 10A is an elevation side view of an inner plate of the axle tower shown in 5A

FIG. 10B is an elevation view of the inner plate shown in FIG. 10A rotated 90°.

FIG. 11 is an elevation view of an inner plate of the axle tower shown in FIG. 5B.

### DETAILED DESCRIPTION OF THE INVENTION

Before describing the embodiments of the axle tower of the present invention a general description of a suspension system, vehicle axle and frame will be provided. The axle towers of the present invention can be used with other suspension systems, vehicle axles and frames without affecting the overall concept of the present invention.

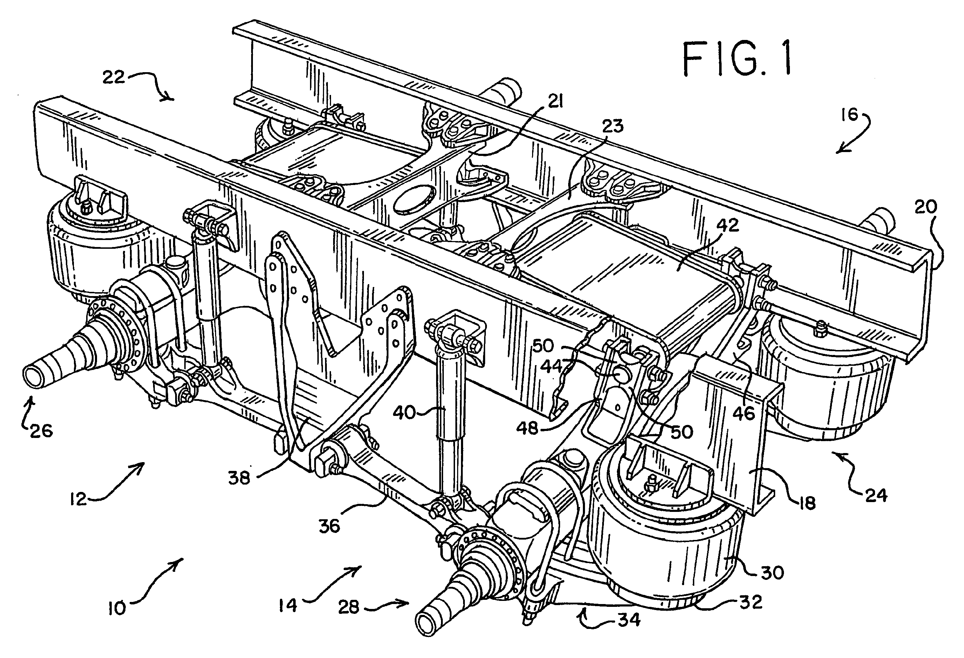

A tandem axle, vehicle suspension system and vehicle frame indicated generally at 10 is shown in FIG. 1. Each axle incorporates the axle towers of the present invention. Axle and suspension system 12 is a leading arm axle type and 14 is a trailing arm type. Each axle and suspension system 12, 14 is shown mounted on a frame 16 which includes longitudinally extending frame rails 18, 20. Frame rails 18, 20 are rigidly connected by a pair of longitudinally spaced apart, transversely extending and parallel cross members 21, 23. The cross members 21, 23 can be connected by any suitable means to each frame rail 18, 20 and typically with mounting brackets.

Leading arm suspension system 22 and trailing arm suspension system 24 support frame 16 on axles 26, 28, respectively. Only the main components of the trailing arm suspension system 24 and which are duplicated on the leading arm suspension system 22 are briefly discussed. Air springs 30 are mounted on frame rails 18, 20 at their top ends and are connected at their bottom ends to pads 32 of axle seats 34. Axle seats 34 are attached to each end of axles 26, 28. On the end of each axle seat 34 opposite the pad 32, torque rods 36 are pivotally connected using a pin and bushing arrangement. The other end of the torque rods 36 is also pivotally connected with a pin and bushing arrangement to a V-shaped hanger 38 that is mounted to the frame rails 18, 20.

Shock absorbers 40 are attached at one end to the frame rail 18 through a bracket and pivotally connected at another end to torque rod 36. Torque box 42 is attached at one end to the frame rails 18, 20 via pivotal connections at both ends of the transversely extending rod (not shown) to the cross member 23. At the other end of the torque box 42, one end of the transversely extending rod 44 is connected to axle tower 46 and the other end of rod 44 is connected to axle tower 48. The rod 44 is sandwiched between clamp ends 50 and held in place with bolts. The rod may be connected to the axle tower by other means.

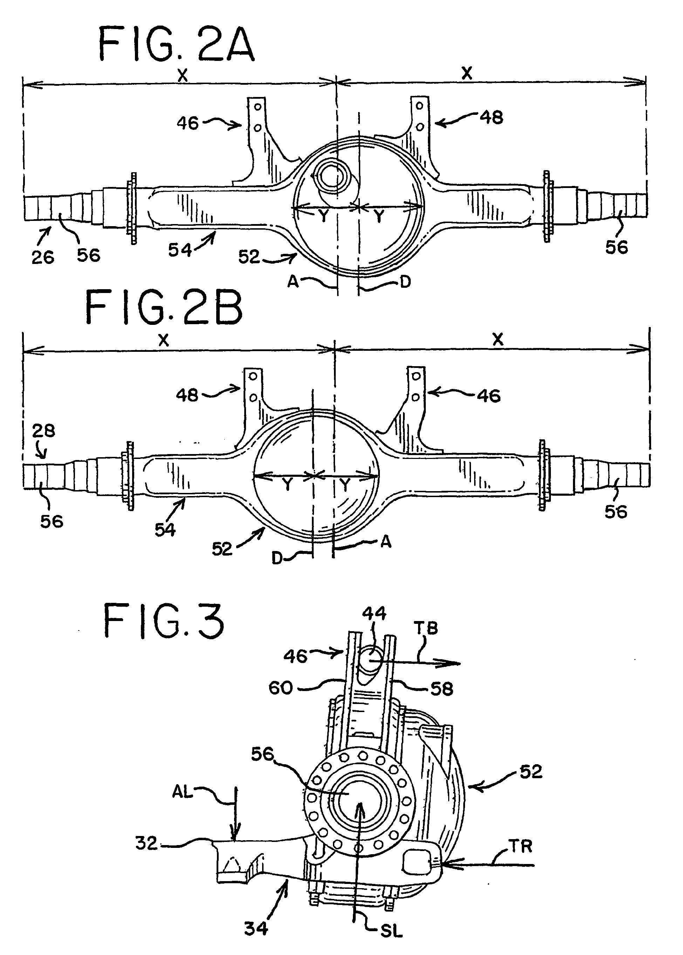

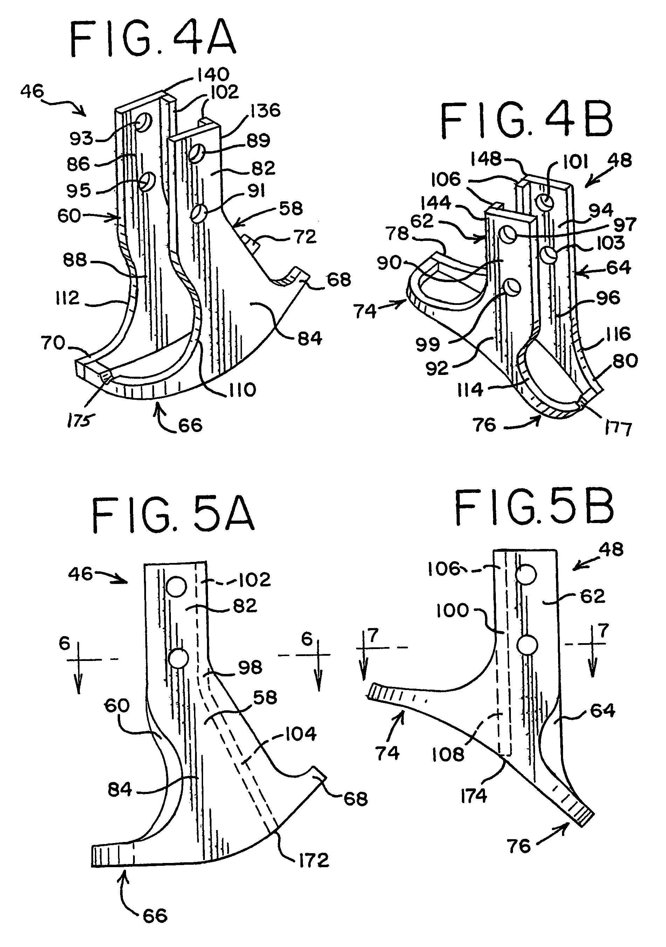

Axles 26, 28 shown in FIGS. 2A and 2B are nearly identical asymmetrical axles which are rotated 180° depending on their whether the axle is in a leading or trailing arm configuration. The axles are referred to as asymmetrical due to the fact that the differential housing portion 52 of each axle 26, 28 is offset from the centerline A of each axle 26, 28. Since the differential housing is offset from the centerline of the axle and since the alignment devices and/or load reacting devices are typically centered in relation to the axle, the axle towers 46, 48 are fixed to the axle housing 54 at asymmetric positions along the differential housing 52. In other words, axle tower 46 which is spaced further from the centerline D of the differential housing and has less of its footprint in contact with and is positioned lower on the differential housing 52 than axle tower 48 which is spaced closer to the centerline D and has more of its footprint in contact with and positioned higher on the differential housing 52. Due to this asymmetric positioning along the differential housing 52, axle towers 46, 48 as illustrated in FIGS. 4A and 4B may have different design configurations (besides the footprint or area contacting the housing) and heights in order to maintain the torque box mounting points horizontally aligned. However, it is not required that the axle towers have a different configuration especially if they are fixed to the axle housing without contacting the differential housing or if they are contacting the differential housing at symmetrical positions. Indeed, for symmetrical axles two axle towers could be utilized that are mirror images of each other; in particular axle tower 46 and a mirror image of axle tower 46 could be used to connect the torque box to a symmetrical axle.

FIG. 3 illustrates some of the forces/loads acting on the axle 26 and axle tower 46. Arrows AL represents the load applied by the air spring (not shown), SL represents the load applied by the spindle 56, TR represents the load applied by the torque rod (not shown), and TB represents the load applied by torque box (not shown). As illustrated in FIG. 3, the torque box (not shown) is in tension and applies a load in the direction of arrow TB. Accordingly, this load places the side plate 58 of axle tower 46, which is closer to the torque box, in compression and places side plate 60 of axle tower, which is further from the toque box, in tension.

Axle tower 46 includes a compression side plate 58 and tension side plate 60 and axle tower 48 includes compression side plate 62 and tension side plate 64 as shown in FIGS. 4A, 4B, 5A and 5B. Each side plate 58, 60, 62, 64 can have two appendages 66, 68, 70, 72, 74, 76, 78, 80, respectively and upper and lower portions 82, 84, 86, 88, 90, 92, 94, 96, respectively. Alternatively, instead of two appendages 66 and 70 intergrally formed with side plates 58, 60, a single appendage incorporating 66 and 70 could be welded to side plates 58, 60. This alternative construction can also be applied to appendages 74, 78 and 76, 80 and side plates 62, 64.

Side plates 58, 60 each have two openings 89, 91, 93, 95, respectively. Openings 89, 91 are concentric with openings 93, 95 respectively and used for attaching the rod 44 of torque box 42 to the axle tower 46. Side plates 62, 64 also have a pair of openings 97, 99, 101, 103 respectively and are arranged in the same manner for the same purpose.

The side plates 58, 60, 62, 64 may be connected by inner plate 98, 100, respectively. The inner plates 98, 100 also have upper and lower portions 102, 104, 106, 108, respectively. The side plates 58, 60, 62, 64 and inner plates 98, 100 may be constructed of a hardened and high strength material such as steel and can be welded together, this includes the welding of appendage 66 to appendage 70 and the welding of appendage 74 to 78. Alternatively, the entire axle tower structure could also be formed as a casting.

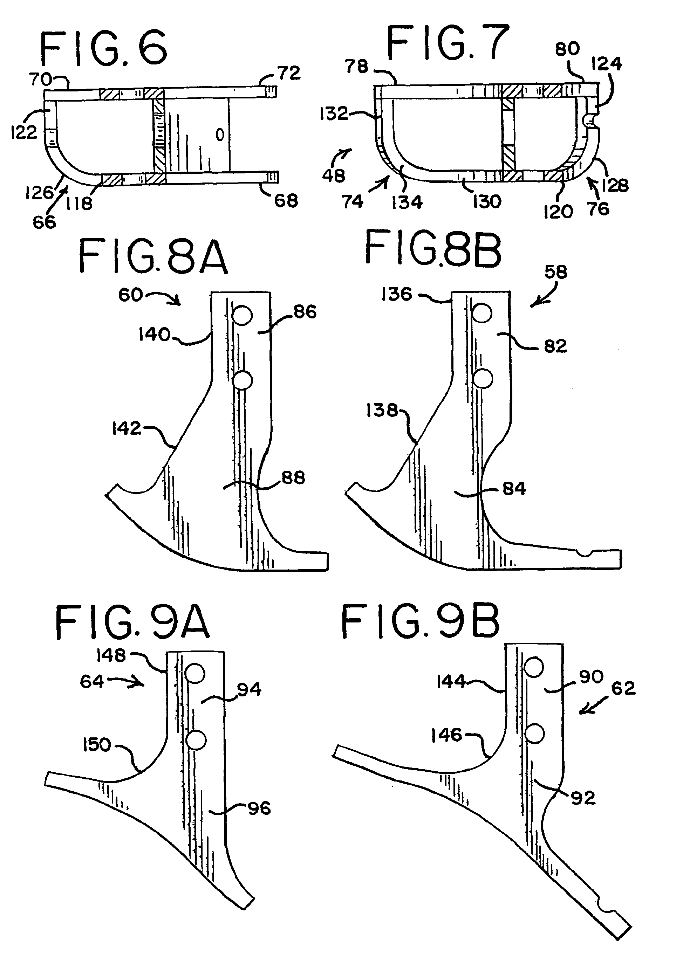

Lower portions 84, 88, 92, 96 have edges 110, 112, 114, 116, respectively that face away from the centerline A or towards the nearest spindle. As discussed above, side plates 58, 62 experience compressive forces applied by the torque box or other load reacting/axle alignment device while side plates 60, 64 experience tensile forces. In order to adequately absorb and disperse this compressive force, edges 110 and 114 may be contoured, or scalloped. Edges 112, 116 can also be contoured or have a curvature. It is also desirable that edges 110, 114 have a greater contour or scallop than edges 112, 116, respectively. In other words, edges 110, 114 are spaced closer to edges 138, 146 respectively, than are edges 112, 116 to edges 142, 150, respectively as shown in FIGS. 8A, 8B, 9A, and 9B.

Appendages 66 and 76 which extend from edges 110, 114, respectively, may curve toward side plates 60, 64, respectively and have radiused corners. As side plates 58, 62 experience compressive forces, these radiused corners reduce or spread the load on the axle and differential housings which would otherwise be concentrated with sharper corners. In addition, the radiused corners reduce the stress concentration to the welds attaching the axle towers to the axle housing.

As shown more clearly in FIGS. 6 and 7, appendages 66, 76 bend at about a 90° angle. In other words, first sections 118, 120 are oriented at about 90° to third sections 122, 124, respectively with curved second sections 126, 128 joining first sections 118, 120 and third sections 122, 124, respectively. The appendages 66, 76 can be long enough to meet and be welded to respective appendages 70, 80. Also, third sections 122, 124 may meet at about a 90° angle to appendage 70, 80 and that first sections 118, 120 extend parallel to appendages 70, 80. Indeed, appendages 66, 74 and 76 are shown in FIGS. 8B and 9B prior to applying the bend or curve.

Appendage 74 may also curve toward and have a length sufficient to meet be welded to appendage 78 since axle tower 48 is positioned higher on the differential housing and typically experiences higher stress in the area of appendages 74, 78. Appendage 74 also bends at about a 90° angle such that first section 130 is at about 90° to third section 132 with curved second section 134 joining the first and third sections 130, 132. Third section 132 may also meet appendage 78 at about a 90° angle and that first section 130 extends parallel to appendage 78. In addition, appendages 68 and 72 may extend parallel to each other as shown in FIG. 4A or can be connected to each other as described with the other pairs of appendages.

Upper and lower portions 82, 84, 86, 88 also have edges 136, 138, 140, 142 that face toward the centerline A as best shown in FIGS. 8A and 8B. Likewise, upper and lower portions 90, 92, 94, 96 have edges 144, 146, 148, 150 that face toward the centerline A. Edges 136, 140, 144, 148 may be substantially linear while edges 138, 142, 146, 150 have some curvature. The curvature or radius of curvature of edge 138 may be substantially the same as that of edge 142 and the curvature or radius of curvature of edge 146 may be substantially the same as that of edge 150.

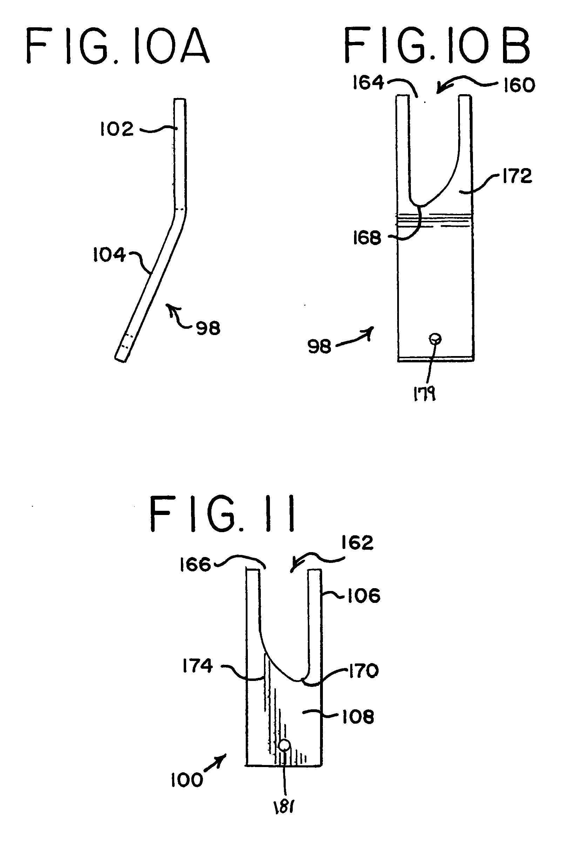

Inner plate 98 of axle tower 46 shown in FIGS. 10A and 10B has upper and lower portions 102, 104, respectively. The inner plate 100 of axle tower 48 also has upper and lower portions 106, 108 as shown in FIG. 11. The upper and lower portions 102, 104 may be inclined relative to each other and may be at an angle of from about 160° to about 170° In the embodiment shown in FIGS. 10A and 10B upper and lower portions meet a about a 165° angle. This helps to stiffen the area of side plates 58, 62 from the lower portion 104 of inner plate 98 to the end of appendages 68, 72 shown in FIG. 5A. Upper and lower portions 106, 108 can be linearly arranged as shown in FIG. 5B especially since the area of side plates 62, 64 from lower portion 174 of the inner plate 100 to the end of appendages 74, 78.

In order to connect the torque box 42 to axle towers 46, 48, inner plates 98, 100 may include slots 160, 162 (see FIGS. 10 and 11) for accepting the rod 44 as shown in FIGS. 1 and 3.

The forked configuration of upper portions 102, 106 creates slots 160, 162 that are V-shaped and have open ends 164, 166 and closed ends 168, 170. The closed ends 168, 170 of the V-shaped slots 160, 162 may be offset. This creates an area of increased material 172, 174. The inner plates 98, 100 are connected to the side plates 58, 60, 62, 64, respectively so that the increased material is closest to side plates 60, 64 to provided added strength to the side of the inner plate that is under compressive force as shown in FIG. 3. Also, the slots 160, 162 may be the same size and shape so that when the torque box 42 is attached to axle towers 46, 48 the transverse extent of the torque box is maintained in parallel relation to the ground or the axle at rest.

Upper portion 102 of inner plate 98 is attached to the upper portions 82, 86 adjacent edges 136, 140, and the inner plate 98 extends to the base 172 of the axle tower 46. Likewise, upper portion 106 of inner plate 100 is attached to upper portions 90, 94 adjacent edges 144, 148, and the inner plate 100 extends to the base 174 as shown in FIGS. 4A, 4B, 5A and 5B. Due to the placement of axle tower 46 lower on the differential housing 52 and axle tower 48 higher on the differential housing 52, inner plate 98 is longer or taller than inner plate 100. In addition, inner plate 98 is also longer due to the inclined relation of upper portion 102 to lower portion 104. In order to center the torque box over the axle (and between the frame rails) the upper portion of the inner plates, particularly the slots should be equally spaced from the axle centerline.

The axle towers 46, 48 may be welded to each axle housing of axles 26, 28. Welds are made along the bases of each side plates, appendages and inner plates. Since axle towers 46, 48 may be welded to the axle housing and appendages 66, 76 may be weld to appendages 70, 80, respectively, the axle housing and axle tower forms a closed volume that can collect water. Accordingly, as shown in FIGS. 4A and 4B notches 175, 177 may be included in appendages 66, 76, respectively to assist in draining away excess water. In addition, as shown in FIGS. 10B and 11 inner plates 104, 108 may include holes 179, 181, respectively to assist with the drainage of any excess water.

## Claims

1. An axle tower for attaching a vehicle suspension component to a vehicle axle (26;28) having a centerline (A), the axle tower (46;48) comprising:
a compression side plate (58;62) disposed generally parallel to a tension side plate (60;64), each of the compression and tension side plates having upper (82,86;90,94) and lower (84,88;92,96) portions, each of the upper and lower portions of the compression and tension side plates having a proximate edge (136,138,140,142;144,146,148,150) positioned closer to the centerline (A) than a distal edge (110,112;114,116);
**characterized in that** the axle tower further comprises:
first (66;76) and second (70;80) appendages extending from the distal edges of the lower portions of the compression and tension side plates, respectively;
third (68;74) and fourth (72;78) appendages extending from the proximate edges (138,142;146,150) of the lower portions (84,88;92,96) of the compression and tension side plates, respectively;
the proximate (138,142;146,150) and distal (110,112;114,116) edges of the lower portions (84,88;92,96) of the compression and tension side plates having an arcuate portion; and
an inner plate (98;100) joining the compression and tension side plates and positioned perpendicular to the compression and tension side plates, the inner plate (98;100) having upper (102;106) and lower (104;108) portions, the upper portion (102;106) of the inner plate (98;100) having a slot (160;162) for attaching the axle tower (46;48) to the vehicle suspension component.

2. The axle tower of claim 1 wherein the first appendage (66;76) includes a first section (118;120) extending from the distal edge (110;114) along the axle (26;28), a second section (126;128) extending from the first section (118;120) along the axle (26:28) and curved toward the tension side plate (60;64) and a third section (122;124) extending from the second section (126;128) along the axle (26;28), and the third section (122;124) is connected to the second appendage (70;80) adjacent an end thereof and is approximately perpendicular to the first section (118;120) and the second appendage (70;80).

3. The axle tower of claim 2 wherein the arcuate portions of the proximate edges (138,142;146,150) of the compression (58;62) and tension (60;64) side plates have substantially equal curvatures, the arcuate portion of the distal edge (110;114) of the compression side plate is spaced a first distance from the proximate edge (138;146) of the compression side plate, the arcuate portion of the distal edge (112;116) of the tension side plate (60;64) is spaced a second distance from the proximate edge (142;150) of the tension side plate, and the first distance is less than the second distance.

4. The axle tower of claim 3 wherein the third appendage (74) includes a first section (130) extending from the proximate edge (146), a second section (134) extending from the first section (130) of the third appendage (74) along the axle and curving toward the tension side plate (64) and a third section (132) extending from the second section (134) of the third appendage (74) along the axle, the third section (132) is connected to the fourth appendage (78) adjacent an end thereof and is approximately perpendicular to the first section (130) of the third appendage (74) and the fourth appendage (78).

5. The axle tower of claim 3 wherein the upper portion (102;106) of the inner plate (98;100) includes a forked end defining the slot (160;162), the slot having an open end (164;166) and a closed end (168;170), the closed end disposed closer to the tension side plate (60;64) than to the compression side plate (58;62).

6. The axle tower of claim 5 wherein the upper portion (102;106) of the inner plate (98;100) is attached to the compression and tension side plates adjacent the proximate edges (140,136;148,144) of the upper portions (86,82;94,90) of the tension and compression side plates.

7. The axle tower of claim 6 wherein the lower portion (104) of the inner plate (98) is inclined relative to the upper portion (102).

8. A mounting assembly for mounting a suspension component to an asymmetrical axle (26;28) including a differential housing (52) having a centerline (D), the mounting assembly comprising:
first and second axle towers (46;48) mounted to the asymmetrical axle (26;28) on opposite sides of the centerline (D), respectively, the first and second axle towers (46;48) each comprising:
compression (58;62) and tension (60;64) side plates disposed parallel to each other and each of the compression and tension side plates having upper (82,86;90,94) and lower (84,88;92,96) portions, each of the upper and lower portions including a proximate edge (136,138,140,142;144,146,148,150) facing towards the centerline (D) and a distal edge (110,112;114,116) facing away from the centerline (D);
**characterized in that** each of the first and second axle towers comprises:
i) first (66;76) and second (70;80) appendages extending from the distal edges (110,112;114,116) of the lower portions (84,88;92,96) of the compression and tension side plates, respectively;
ii) third (68;74) and fourth (72;78) appendages extending from the proximate edges (138,142;146,150) of the lower portions (84,88;92,96) of the compression (58;62) and tension (60;64) side plates, respectively; and
iii) an inner plate (98;100) joining the compression and tension side plates and positioned perpendicular to the compression and tension side plates, each of the inner plates (98;100) having a slot (150;162) for attaching the respective axle tower (46;48) to the vehicle suspension component, each of the slots (160;162) being spaced an equal distance from a center of the axle (A).

9. The mounting assembly of claim 8 wherein:
a) each of the proximate edges of the lower portions of the compression and tension side plates of the second axle tower has an arcuate portion, the arcuate portion of the compression side plate of the second axle tower having a radius of curvature equal to a radius of curvature of the arcuate portion of the tension side plate of the second axle tower;
b) each of the distal edges of the lower portions of the compression and tension side plates has an arcuate portion;
c) each of the arcuate portions of the compression side plates of the first and second axle towers is spaced a first distance from the proximate edges of the compression side plates of the first and second axle towers, respectively;
d) each of the arcuate portions of the distal edges of the tension side plates of the first and second axle towers is spaced a second distance from the proximate edges of the tension side plates of the first and second axle towers, respectively; and
e) the first distance is less than the second distance.

10. The mounting assembly of claim 9 wherein each of the first appendages (66;76) of the first and second axle towers (46;48) includes a first section (118;120) extending from the distal edge (110;114) of the lower portion (84;92) of its respective compression side plate (58;62), a second section (126;128) extending from its respective first section (118;120) and curving toward its respective second appendage (70;80), and a third section (122;124) extending from its respective second section (126;128), and the third section (122;124) is connected to its respective second appendage (70;80) adjacent an end thereof, and is approximately perpendicular to its respective first section (118;120) and its respective second appendage (70;80).

11. The mounting assembly of claim 10 wherein the third appendage (74) of the second axle tower (48) includes
a first section (130) extending from the proximate edge (146) of the lower portion (92) of the compression side plate (62) of the second axle tower (48),
a second section (134) extending from the first section (130) of the third appendage (74) of the second axle tower (48) and curving toward the tension side plate (64) of the second axle tower (48) and
a third section (132) extending from the second section (134) of the third appendage (74) of the second axle tower (48), the third section (132) of the third appendage (74) is connected to the fourth appendage (78) of the second axle tower (48) adjacent an end thereof and is approximately perpendicular to the first section (130) of the third appendage (74) of the second axle tower (48) and the fourth appendage (78) of the second axle tower (48), and wherein the third (68) and the fourth (72) appendages of the first axle tower (46) extend parallel to each other.

12. The mounting assembly of claim 11 wherein each of the inner plates (98;100) of the first and second axle towers (46;48) has an upper portion (102;106) and a lower portion (104;108), each of the upper portions include a forked end defining the slot (160;162), each of the slots (160;162) has an open end (164;166) and a closed end (168;170), each of the closed ends is disposed closer to its respective tension side plate (60;64) than to its respective compression side plate (58;62).

13. The mounting assembly of claim 12 wherein each of the upper portions (102;106) of the inner plates (98;100) is attached to the compression and tension side plates adjacent the proximate edges (136,140;144,148) of the upper portions (82,86;90,94) of the compression and tension side plates, and wherein the slots of the first and second axle towers (46;48) are spaced equally from a center of the axle (A).

14. The mounting assembly of claim 13 wherein the lower portion (104) of the inner plate (98) of the first axle tower (46) is inclined relative to the upper portion (102) of the inner plate of the first axle tower (46).

15. The mounting assembly of claim 14 wherein the first (66) and second (70) appendages of the first axle tower (46) extend a third distance along the axle (26) and the first (76) and second (80) appendages of the second axle tower (48) extend a fourth distance along the axle, the third distance is less than the fourth distance, and wherein the third (68) and fourth (72) appendages of the first axle tower (46) extend a fifth distance along the axle and the third (74) and fourth (78) appendages of the second axle tower (48) extend a sixth distance along the axle, the fifth distance is less than the sixth distance.

16. A suspension system for supporting a vehicle chassis including transversely spaced longitudinally extending first (18) and second (20) frame rails over a transversely extending axle (26;28) including a centerline (A), the suspension system (22;24) comprising:
a) a cross member (21;23) extending transversely between and connected to the first (18) and second (20) frame rails;
b) a multifunctional suspension component (42) connected at one end to the cross member (21;23) and connected at another end to first and second axle towers (46;48); and
c) the first and second axle towers (46;48) transversely spaced apart and fixed to the axle (26;28) at opposite sides of the centerline (A), the first and second axle towers (46;48) each comprising:
compression (58;62) and tension (60;64) side plates longitudinally spaced from and parallel to each other, each of the compression and tension side plates having upper (82,86;90,94) and lower (84,88;92,96) portions, each of the upper and lower portions having a proximate edge (136,138,140,142;144,146,148,150) facing towards the centerline (A) and a distal edge (110,112;114,116) facing away from the centerline (A);
**characterized in that** each of the first and second axle towers comprises:
i) first (66;76) and second (70;80) appendages extending from the distal edges (110,112;114,116) of the lower portions (84,88;92,96) of the compression (58;62) and tension (60;64) side plates, respectively;
ii) third (68;74) and fourth (72;78) appendages extending from the proximate edges (138,142;146,150) of the lower portions (84,88;92,96) of the compression and tension side plates, respectively; and
iii) an inner plate (98;100) joining the compression and tension side plates and positioned perpendicular to the compression and tension side plates, each of the inner plates (98;100) having a slot (160;162) for attaching the respective axle tower (46;48) to the multifunctional suspension component (42), the slots (160;162) of the first and second axle towers (46;48) being equally spaced from the centerline (A).

17. The suspension system of claim 16 wherein:
a) each of the distal edges (110,112;114,116) of the lower portions (84,88;92,96) of the compression and tension side plates has an arcuate portion;
b) each of the arcuate portions of the compression side plates (58;62) of the first and second axle towers (46;48) is spaced a first distance from the proximate edges (138;146) of the compression side plates (58;62) of the first and second axle towers (46;48), respectively;
c) each of the arcuate portions of the distal edges (112;116) of the tension side plates (60;64) of the first and second axle towers (46;48) is spaced a second distance from the proximate edges (142;150) of the tension side plates (60;64) of the first and second axle towers(46;48), respectively; and
d) the first distance is less than the second distance.

18. The suspension system of claim 17 wherein each of the first appendages (66;76) of the first and second axle towers (46;48) include first (118;120), second (126;128) and third (122;124) sections, each of the first sections (118;120) extends from its respective distal edges (110;114), each of the second sections (126;128) extends from its respective first sections (118;120) and curves toward its respective tension side plate (60;64), and each of the third sections (122;124) extends from its respective second section (126;128) and connects to its respective second appendage (70;80) adjacent an end thereof and each of the third sections (122;124) are positioned approximately perpendicular to its respective first section (118;120) and to its respective second appendage (70;80).

19. The suspension system of claim 18 wherein the third appendage (74) of the second axle tower (48) includes
a first section (130) extending from the proximate edge (146) of the lower portion (92) of the compression side plate (62) of the second axle tower (48),
a second section (134) extending from the first section (130) of the third appendage (74) of the second axle tower (48) and curving toward the tension side plate (64) of the second axle tower (48) and
a third section (132) extending from the second section (134) of the third appendage (74) of the second axle tower (48), and the third section (132) of the third appendage (74) of the second axle tower (48) is connected to the fourth appendage (78) of the second axle tower (48) adjacent an end thereof and is positioned approximately perpendicular to the first section (130) of the third appendage (74) of the second axle tower (48) and to the fourth appendage (78) of the second axle tower (48).

20. The suspension system of claim 19 wherein:
a) each of the inner plates (98;100) has an upper portion (102;106) and a lower portion (104;108), each of the upper portions includes a forked end defining the slot (160;162), each of the slots (160;162) has an open end (164;166) and a closed end (168;170), each of the closed ends is disposed closer its respective tension side plate (60;64) than to its respective compression side plate (58;62); and
b) the upper portions (102;106) of the inner plates (98;100) of the first and second axle towers (46;48) are attached to the compression and tension side plates of the respective first and second axle towers adjacent the proximate edges (136,140;144,148) of the upper portions (82,86;90,94) of the compression and tension side plates.

## Patentansprüche

1. Achsenaufsatz zur Befestigung einer Fahrzeugaufhängungskomponente an einer Fahrzeugachse (26, 28) mit einer Mittelache (A), wobei der Achsenaufsatz (46, 48) Folgendes umfasst:
eine Platte (58; 62) an der Druckseite, die im Allgemeinen parallel zu einer Platte (60; 64) an der Zugseite angeordnet ist, wobei die Platten an Druck- und Zugseite jeweils obere (82, 86; 90, 94) und untere (84, 88; 92, 96) Abschnitte aufweisen, wobei die oberen und unteren Abschnitte der Platten an Druck- und Zugseite jeweils einen proximalen Rand (136, 138, 140, 142; 144, 146, 148, 150) aufweisen, der näher an der Mittelachse (A) angeordnet ist als ein distaler Rand (110, 112; 114, 116);
**dadurch gekennzeichnet, dass** der Achsenaufsatz ferner Folgendes umfasst:
erste (66; 76) und zweite (70; 80) Fortsätze, die sich jeweils von den distalen Rändern der unteren Abschnitte der Platten an Druck- und Zugseite erstrecken;
dritte (68; 74) und vierte (72; 78) Fortsätze, die sich jeweils von den proximalen Rändern (138, 142; 146, 150) der unteren Abschnitte (84, 88; 92, 96) der Platten an Druck- und Zugseite erstrecken;
wobei die proximalen (138, 142;146, 150) und die distalen (110, 112; 114, 116) Ränder der unteren Abschnitte (84, 88; 92, 96) der Platten an Druck- und Zugseite gekrümmte Abschnitte aufweisen; und
eine Innenplatte (98; 100), die die Platten an Druck- und Zugseite verbindet und im rechten Winkel zu diesen angeordnet ist, wobei die Innenplatte (98; 100) obere (102; 106) und untere (104; 108) Abschnitte aufweist, wobei der obere Abschnitt (102; 106) der Innenplatte (98; 100) einen Schlitz (160; 162) aufweist, um den Achsenaufsatz (46; 48) an der Fahrzeugaufhängungskomponente zu befestigen.

2. Achsenaufsatz nach Anspruch 1, worin der erste Fortsatz (66; 76) Folgendes umfasst: einen ersten Abschnitt (118; 120), der sich von dem distalen Rand (110; 114) entlang der Achse (26; 28) erstreckt; einen zweiten Abschnitt (126; 128), der sich von dem ersten Abschnitt (118; 120) entlang der Achse (26; 28) erstreckt und in Richtung der Platte (60; 64) an der Zugseite gekrümmt ist; und einen dritten Abschnitt (122; 124), der sich von dem zweiten Abschnitt (126; 128) entlang der Achse (26; 28) erstreckt, wobei der dritte Abschnitt (122; 124) an ein Ende des zweiten Fortsatzes (70; 80) angrenzend mit diesem verbunden ist und etwa im rechten Winkel auf den ersten Abschnitt (118; 120) und den zweiten Fortsatz (70; 80) steht.

3. Achsenaufsatz nach Anspruch 2, worin die gekrümmten Abschnitte der proximalen Ränder (138, 142; 146, 150) der Platten an Druckseite (58; 62) und Zugseite (60; 64) im Wesentlichen dieselbe Krümmung aufweisen, wobei der gekrümmte Abschnitt des distalen Rands (110; 114) der Platte an der Druckseite in einem ersten Abstand von dem proximalen Rand (138; 146) der Platte an der Druckseite beabstandet ist, und wobei der gekrümmte Abschnitt des distalen Rands (112; 116) der Platte an der Zugseite (60, 64) in einem zweiten Abstand von dem proximalen Rand (142; 150) der Platte an der Zugseite beabstandet ist und der erste Abstand geringer als der zweite Abstand ist.

4. Achsenaufsatz nach Anspruch 3, worin der dritte Fortsatz (74) Folgendes umfasst: einen ersten Abschnitt (130), der sich von dem proximalen Rand (146) erstreckt; einen zweiten Abschnitt (134), der sich von dem ersten Abschnitt (130) des dritten Fortsatzes (74) entlang der Achse erstreckt und in Richtung der Platte (64) an der Zugseite gekrümmt ist; und einen dritten Abschnitt (132), der sich von dem zweiten Abschnitt (134) des dritten Fortsatzes (74) entlang der Achse erstreckt, wobei der dritte Abschnitt (132) an ein Ende des vierten Fortsatzes (78) angrenzend mit diesem verbunden ist und etwa im rechten Winkel auf den ersten Abschnitt (130) des dritten Fortsatzes (74) und den vierten Fortsatz (78) steht.

5. Achsenaufsatz nach Anspruch 3, worin der obere Abschnitt (102; 106) der Innenplatte (98; 100) ein gabelförmiges Ende umfasst, das den Schlitz (160; 162) definiert, wobei der Schlitz ein offenes Ende (164; 166) und ein geschlossenes Ende (168; 170) aufweist, wobei das geschlossene Ende näher an der Platte (60; 64) an der Zugseite als an der Platte (58; 62) an der Druckseite angeordnet ist.

6. Achsenaufsatz nach Anspruch 5, worin der obere Abschnitt (102; 106) der Innenplatte (98; 100) an den Platten an Druck- und Zugseite an die proximalen Ränder (140, 136; 148, 144) der oberen Abschnitte (86, 82; 94, 90) der Platten an Zug- und Druckseite angrenzend befestigt ist.

7. Achsenaufsatz nach Anspruch 6, worin der untere Abschnitt (104) der Innenplatte (98) in Bezug auf den oberen Abschnitt (102) geneigt ist.

8. Befestigungsanordnung zur Befestigung einer Aufhängungskomponente an einer asymmetrischen Achse (26; 28), die ein Ausgleichsgehäuse (52) mit einer Mittelachse (D) umfasst, wobei die Befestigungsanordnung Folgendes umfasst:
erste und zweite Achsenaufsätze (46; 48), die jeweils an der asymmetrischen Achse (26; 28) an entgegengesetzten Seiten der Mittelachse (D) angeordnet sind, wobei die ersten und zweiten Achsenaufsätze (46; 48) jeweils Folgendes umfassen:
jeweils eine Platte an der Druckseite (58; 62) und an der Zugseite (60; 64), die parallel zueinander angeordnet sind, wobei die Platten an Druck- und Zugseite jeweils obere (82, 86; 90, 94) und untere (84, 88; 92, 96) Abschnitte aufweisen, wobei die oberen und unteren Abschnitte der Platten an Druck- und Zugseite jeweils einen proximalen Rand (136, 138, 140, 142; 144, 146, 148, 150), der der Mittelachse (D) zugewandt ist, und einen distalen Rand (110, 112; 114, 116) aufweisen, der von der Mittelachse (D) abgewandt ist;
**dadurch gekennzeichnet, dass** der erste und der zweite Achsenaufsatz jeweils ferner Folgendes umfasst:
i) erste (66; 76) und zweite (70; 80) Fortsätze, die sich jeweils von den distalen Rändern (110, 112; 114, 116) der unteren Abschnitte (84, 88; 92; 96) der Platten an Druck- und Zugseite erstrecken;
ii) dritte (68; 74) und vierte (72; 78) Fortsätze, die sich jeweils von den proximalen Rändern (138, 142; 146, 150) der unteren Abschnitte (84, 88; 92, 96) der Platten an der Druckseite (58; 62) und an der Zugseite (60; 64) erstrecken; und
iii) eine Innenplatte (98; 100), die die Platten an Druck- und Zugseite verbindet und im rechten Winkel zu diesen angeordnet ist, wobei die Innenplatten (98; 100) jeweils einen Schlitz (160; 162) zur Befestigung des jeweiligen Achsenaufsatzes (46; 48) an der Fahrzeugaufhängungskomponente aufweisen, wobei jeder der Schlitze (160; 162) in gleichem Abstand von einem zentralen Punkt der Achse (A) beabstandet ist.

9. Befestigungsanordnung nach Anspruch 8, worin:
a) jeder der proximalen Ränder der unteren Abschnitte der Platten an Druck- und Zugseite des zweiten Achsenaufsatzes einen gekrümmten Abschnitt aufweist, wobei der gekrümmte Abschnitt der Platte an der Druckseite des zweiten Achsenaufsatzes denselben Krümmungsradius aufweist wie der gekrümmte Abschnitt der Platte an der Zugseite des zweiten Achsenaufsatzes;
b) jeder der distalen Ränder der unteren Abschnitte der Platten an Druck- und Zugseite einen gekrümmten Abschnitt aufweist;
c) jeder der gekrümmten Abschnitte der Platten an der Druckseite des ersten und des zweiten Achsenaufsatzes in einem ersten Abstand von den proximalen Rändern der Platten an der Druckseite des ersten und zweiten Achsenaufsatzes beabstandet ist;
d) jeder der gekrümmten Abschnitte der distalen Ränder der Platten an der Zugseite des ersten und des zweiten Achsenaufsatzes in einem zweiten Abstand von den proximalen Rändern der Platten an der Zugseite des ersten und zweiten Achsenaufsatzes beabstandet ist; und
e) der erste Abstand geringer als der zweite Abstand ist.

10. Befestigungsanordnung nach Anspruch 9, worin jede der ersten Fortsätze (66; 76) des ersten und des zweiten Achsenaufsatzes (46; 48) Folgendes umfasst: einen ersten Abschnitt (118; 120), der sich von dem distalen Rand (110; 114) des unteren Abschnitts (84; 92) der entsprechenden Platte (58; 62) an der Druckseite erstreckt; einen zweiten Abschnitt (126; 128), der sich von dem entsprechenden ersten Abschnitt (118; 120) erstreckt und in Richtung der entsprechenden zweiten Anfügung (70; 80) gekrümmt ist; und einen dritten Abschnitt (122; 124), der sich von dem entsprechenden zweiten Abschnitt (126; 128) erstreckt, wobei der dritte Abschnitt (122; 124) an ein Ende des entsprechenden zweiten Fortsatzes (70; 80) angrenzend mit diesem verbunden ist und etwa im rechten Winkel auf den entsprechenden ersten Abschnitt (118; 120) und den entsprechenden zweiten Fortsatz (70; 80) steht.

11. Befestigungsanordnung nach Anspruch 10, worin der dritte Fortsatz (74) des zweiten Achsenaufsatzes (48) Folgendes umfasst:
einen ersten Abschnitt (130), der sich von dem proximalen Rand (146) des unteren Abschnitts (92) der Platte (62) an der Druckseite des zweiten Achsenaufsatzes (48) erstreckt;
einen zweiten Abschnitt (134), der sich von dem ersten Abschnitt (130) des dritten Fortsatzes (74) des zweiten Achsenaufsatzes (48) erstreckt und in Richtung der Platte (64) an der Zugseite des zweiten Achsenaufsatzes (48) gekrümmt ist; und
einen dritten Abschnitt (132), der sich von dem zweiten Abschnitt (134) des dritten Fortsatzes (74) des zweiten Achsenaufsatzes (48) erstreckt, wobei der dritte Abschnitt (132) des dritten Fortsatzes (74) an ein Ende der vierten Anfügung (78) des zweiten Achsenaufsatzes (48) angrenzend mit diesem verbunden ist und etwa im rechten Winkel auf den ersten Abschnitt (130) des dritten Fortsatzes (74) des zweiten Achsenaufsatzes (48) und den vierte Fortsatz (78) des zweiten Achsenaufsatzes (48) steht, wobei sich der dritte (88) und der vierte (72) Fortsatz des ersten Achsenaufsatzes (46) parallel zueinander erstrecken.

12. Befestigungsanordnung nach Anspruch 11, worin jede der Innenplatten (98; 100) des ersten und des zweiten Achsenaufsatzes (46; 48) einen oberen Abschnitt (102; 106) und einen unteren Abschnitt (104; 108) umfasst, jeder der oberen Abschnitte ein gabelförmiges Ende umfasst, das den Schlitz (160; 162) definiert, wobei jeder der Schlitze (160; 162) ein offenes Ende (164; 166) und ein geschlossenes Ende (168; 170) aufweist, wobei jedes der geschlossenen Enden näher an der jeweiligen Platte (60; 64) an der Zugseite als an der jeweiligen Platte (58; 62) an der Druckseite angeordnet ist.

13. Befestigungsanordnung nach Anspruch 12, worin jeder der oberen Abschnitte (102; 106) der Innenplatten (98; 100) an den Platten an Druck- und Zugseite an die proximalen Ränder (136, 140; 144, 148) der oberen Abschnitte (82, 86; 90, 94) der Platten an Druck- und Zugseite angrenzend befestigt ist und worin die Schlitze des ersten und des zweiten Achsenaufsatzes (46; 48) vom Zentrum der Achse (A) in demselben Abstand beabstandet sind.

14. Befestigungsanordnung nach Anspruch 13, worin der untere Abschnitt (104) der Innenplatte (98) des ersten Achsenaufsatzes (46) in Bezug auf den oberen Abschnitt (102) der Innenplatte des ersten Achsenaufsatzes (46) geneigt ist.

15. Befestigungsanordnung nach Anspruch 14, worin sich der erste (66) und der zweite (70) Fortsatz des ersten Achsenaufsatzes (46) über einen dritten Abstand entlang der Achse (26) erstrecken und sich der erste (76) und der zweite (80) Fortsatz des zweiten Achsenaufsatzes (48) über einen vierten Abstand entlang der Achse erstrecken, wobei der dritte Abstand geringer ist als der vierte Abstand, und worin sich der dritte (68) und der vierte (72) Fortsatz des ersten Achsenaufsatzes (46) über einen fünften Abstand entlang der Achse erstrecken und sich der dritte (74) und der vierte (78) Fortsatz des zweiten Achsenaufsatzes (48) über einen sechsten Abstand entlang der Achse erstrecken, wobei der fünfte Abstand geringer ist als der sechste Abstand.

16. Aufhängungssystem zur Stützung einer Fahrzeugkarosserie mit in Querrichtung beabstandeter, sich in Längsrichtung erstreckender erster (18) und zweiter (20) Querschienen über einer sich in Querrichtung erstreckenden Achse (26; 28), die eine Mittelachse (A) umfasst, wobei das Aufhängungssystem (22; 24) Folgendes umfasst:
a) ein Querelement (21; 23), das sich in Querrichtung zwischen der ersten (18) und der zweiten (20) Querschiene erstreckt und mit diesen verbunden ist;
b) eine multifunktionelle Aufhängungskomponente (42), die an einem Ende mit dem Querelement (21; 23) und am anderen Ende mit dem ersten und dem zweiten Achsenaufsatz (46; 48) verbunden ist; und
c) den ersten und den zweiten Achsenaufsatz (46; 48), die in Querrichtung beabstandet und an entgegengesetzten Seiten der Mittelachse (A) an der Achse (26; 28) befestigt sind, wobei der erste und der zweite Achsenaufsatz (46; 48) jeweils Folgendes umfassen:
jeweils eine Platte an der Druckseite (58; 62) und an der Zugseite (60; 64), die parallel zueinander angeordnet sind, wobei die Platten an Druck- und Zugseite jeweils obere (82, 86; 90, 94) und untere (84, 88; 92, 96) Abschnitte aufweisen, wobei die oberen und unteren Abschnitte der Platten an Druck- und Zugseite jeweils einen proximalen Rand (136, 138, 140, 142; 144, 146, 148, 150), der der Mittelachse (A) zugewandt ist, und einen distalen Rand (110, 112; 114, 116) aufweisen, der von der Mittelachse (A) abgewandt ist;
**dadurch gekennzeichnet, dass** der erste und der zweite Achsenaufsatz ferner jeweils Folgendes umfassen:
i) erste (66; 76) und zweite (70; 80) Fortsätze, die sich jeweils von den distalen Rändern (110, 112; 114, 116) der unteren Abschnitte (84, 88; 92; 96) der Platten an Druck- und Zugseite erstrecken;
ii) dritte (68; 74) und vierte (72; 78) Fortsätze, die sich jeweils von den proximalen Rändern (138, 142; 146, 150) der unteren Abschnitte (84, 88; 92, 96) der Platten an der Druckseite (58; 62) und an der Zugseite (60; 64) erstrecken; und
iii) eine Innenplatte (98; 100), die die Platten an Druck- und Zugseite verbindet und im rechten Winkel zu diesen angeordnet ist, wobei die Innenplatten (98; 100) jeweils einen Schlitz (160; 162) zur Befestigung des jeweiligen Achsenaufsatzes (46; 48) an der Fahrzeugaufhängungskomponente aufweisen, wobei jeder der Schlitze (160; 162) in gleichem Abstand von einem zentralen Punkt der Achse (A) beabstandet ist.

17. Aufhängungssystem nach Anspruch 16, worin:
a) jeder der distalen Ränder (110, 112; 114, 116) der unteren Abschnitte (84, 88; 92, 96) der Platten an Druck- und Zugseite einen gekrümmten Abschnitt aufweist;
b) jeder der gekrümmten Abschnitte der Platten (58; 62) an der Druckseite des ersten und des zweiten Achsenaufsatzes (46; 48) in einem ersten Abstand von den proximalen Rändern (138; 146) der Platten (58; 62) an der Druckseite des ersten und zweiten Achsenaufsatzes (46; 48) beabstandet ist;
c) jeder der gekrümmten Abschnitte der distalen Ränder (112; 116) der Platten (60; 64) an der Zugseite des ersten und des zweiten Achsenaufsatzes (46; 48) in einem zweiten Abstand von den proximalen Rändern (142; 150) der Platten (60; 64) an der Zugseite des ersten und zweiten Achsenaufsatzes (46; 48) beabstandet ist; und
d) der erste Abstand geringer als der zweite Abstand ist.

18. Aufhängungssystem nach Anspruch 17, worin die ersten Fortsätze (66; 76) des ersten und des zweiten Achsenaufsatzes (46; 48) Folgendes umfassen: erste (118; 120), zweite (126; 128) und dritte (122; 124) Abschnitte, wobei sich die ersten Abschnitte (118; 120) jeweils von dem entsprechenden distalen Rand (110; 114) erstrecken; die zweite Abschnitte (126; 128) sich jeweils von den entsprechenden ersten Abschnitten (118; 120) erstrecken und in Richtung der entsprechenden Platte (60; 64) an der Zugseite gekrümmt sind; und die dritten Abschnitte (122; 124) sich jeweils von dem entsprechenden zweiten Abschnitt (126; 128) erstrecken und an ein Ende des entsprechenden zweiten Fortsatzes (70; 80) angrenzend mit diesem verbunden sind, wobei die dritten Abschnitte (122; 124) jeweils etwa im rechten Winkel auf den entsprechenden ersten Abschnitt (118; 120) und den entsprechenden zweiten Fortsatz (70; 80) stehen.

19. Aufhängungssystem nach Anspruch 18, worin der dritte Fortsatz (74) des zweiten Achsenaufsatzes (48) Folgendes umfasst:
einen ersten Abschnitt (130), der sich von dem proximalen Rand (146) des unteren Abschnitts (92) der Platte (62) an der Druckseite des zweiten Achsenaufsatzes (48) erstreckt,
einen zweiten Abschnitt (134), der sich von dem ersten Abschnitt (130) des dritten Fortsatzes (74) des zweiten Achsenaufsatzes (48) erstreckt und in Richtung der Platte (64) an der Zugseite des zweiten Achsenaufsatzes (48) gekrümmt ist, und
einen dritten Abschnitt (132), der sich von dem zweiten Abschnitt (134) des dritten Fortsatzes (74) des zweiten Achsenaufsatzes (48) erstreckt, wobei der dritte Abschnitt (132) des dritten Fortsatzes (74) des zweiten Achsenaufsatzes (48) an ein Ende des vierten Fortsatzes (78) des zweiten Achsenaufsatzes (48) angrenzend mit diesem verbunden ist und etwa im rechten Winkel auf den ersten Abschnitt (130) des dritten Fortsatzes (74) des zweiten Achsenaufsatzes (48) und den vierten Fortsatz (78) des zweiten Achsenaufsatzes (48) steht.

20. Aufhängungssystem nach Anspruch 19, worin:
a) jede der Innenplatten (98; 100) einen oberen Abschnitt (102; 106) und einen unteren Abschnitt (104; 108) umfasst, jeder der oberen Abschnitte ein gabelförmiges Ende umfasst, das den Schlitz (160; 162) definiert, wobei jeder der Schlitze (160; 162) ein offenes Ende (164; 166) und ein geschlossenes Ende (168; 170) aufweist, wobei jedes der geschlossenen Enden näher an der jeweiligen Platte (60; 64) an der Zugseite als an der jeweiligen Platte (58; 62) an der Druckseite angeordnet ist; und
b) die oberen Abschnitte (102; 106) der Innenplatten (98; 100) des ersten und des zweiten Achsenaufsatzes (46; 48) an den Platten an Druck- und Zugseite des entsprechenden ersten und zweiten Achsenaufsatzes an die proximalen Ränder (136, 140; 144, 148) der oberen Abschnitte (82, 86; 90, 94) der Platten an Druck- und Zugseite angrenzend befestigt sind.

## Revendications

1. Dispositif de fixation d'essieu pour fixer un composant de suspension de véhicule sur un essieu de véhicule (26; 28) ayant un axe central (A), le dispositif de fixation d'essieu (46; 48) comprenant:
une plaque latérale de compression (58; 62) disposée généralement parallèlement à une plaque latérale de tension (60; 64), chacune des plaques latérales de compression et de tension ayant des parties supérieure (82, 86; 90, 94) et inférieure (84, 88; 92, 96), chacune des parties supérieure et inférieure des plaques latérales de compression et de tension ayant un bord proximal (136, 138, 140, 142; 144, 146, 148, 150) positionné plus à proximité de l'axe central (A) qu'un bord distal (110, 112; 114, 116) ;
**caractérisé en ce que** le dispositif de fixation d'essieu comprend en outre:
des premier (66; 76) et deuxième (70; 80) appendices s'étendant à partir des bords distaux des parties inférieures des plaques latérales de compression et de tension, respectivement;
des troisième (68; 74) et quatrième (72; 78) appendices s'étendant à partir des bords proximaux (138, 142; 146, 150) des parties inférieures (84, 88; 92, 96) des plaques latérales de compression et de tension respectivement;
les bords proximaux (138, 142; 146, 150) et distaux (110, 112; 114, 116) des parties inférieures (84, 88; 92, 96) des plaques latérales de compression et de tension ayant une partie arquée; et
une plaque interne (98; 100) assemblant les plaques latérales de compression et de tension et étant positionnée perpendiculairement aux plaques latérales de compression et de tension, la plaque interne (98; 100) ayant des parties supérieure (102; 106) et inférieure (104; 108), la partie supérieure (102; 106) de la plaque interne (98; 100) ayant une fente (160; 162) pour fixer le dispositif de fixation d'essieu (46; 48) sur le composant de suspension du véhicule.

2. Dispositif de fixation d'essieu selon la revendication 1, dans lequel le premier appendice (66; 76) comprend une première section (118; 120) s'étendant à partir du bord distal (110; 114) le long de l'essieu (26; 28), une deuxième section (126; 128) s'étendant à partir de la première section (118; 120) le long de l'essieu (26; 28) et incurvée vers la plaque latérale de tension (60; 64) et une troisième section (122; 124) s'étendant à partir de la deuxième section (126; 128) le long de l'essieu (26; 28), et la troisième section (122; 124) est raccordée au deuxième appendice (70; 80) adjacent à son extrémité et est approximativement perpendiculaire à la première section (118; 120) et au deuxième appendice (70; 80).

3. Dispositif de fixation d'essieu selon la revendication 2, dans lequel les parties arquées des bords proximaux (138, 142; 146, 150) des plaques latérales de compression (58; 62) et de tension (60; 64) ont des courbures sensiblement identiques, la partie arquée du bord distal (110; 114) de la plaque latérale de compression est espacée selon une première distance du bord proximal (138; 146) de la plaque latérale de compression, la partie arquée du bord distal (112; 116) de la plaque latérale de tension (60; 64) est espacée selon une deuxième distance du bord proximal (142; 150) de la plaque latérale de tension, et la première distance est inférieure à la deuxième distance.

4. Dispositif de fixation d'essieu selon la revendication 3, dans lequel le troisième appendice (74) comprend une première section (130) s'étendant à partir du bord proximal (146), une deuxième section (134) s'étendant à partir de la première section (130) du troisième appendice (74) le long de l'essieu et s'incurvant vers la plaque latérale de tension (64) et une troisième section (132) s'étendant à partir de la deuxième section (134) du troisième appendice (74) le long de l'essieu, la troisième section (132) est raccordée au quatrième appendice (78) adjacent à son extrémité et est approximativement perpendiculaire à la première section (130) du troisième appendice (74) et du quatrième appendice (78).

5. Dispositif de fixation d'essieu selon la revendication 3, dans lequel la partie supérieure (102; 106) de la plaque interne (98; 100) comprend une extrémité en forme de fourche définissant la fente (160; 162), la fente ayant une extrémité ouverte (164; 166) et une extrémité fermée (168; 170), l'extrémité fermée étant disposée plus à proximité de la plaque latérale de tension (60; 64) que de la plaque latérale de compression (58; 62).

6. Dispositif de fixation d'essieu selon la revendication 5, dans lequel la partie supérieure (102; 106) de la plaque interne (98; 100) est fixée sur les plaques latérales de compression et de tension adjacentes aux bords proximaux (140, 136; 148, 144) des parties supérieures (86, 82; 94, 90) des plaques latérales de tension et de compression.

7. Dispositif de fixation d'essieu selon la revendication 6, dans lequel la partie inférieure (104) de la plaque interne (98) est inclinée par rapport à la partie supérieure (102).

8. Ensemble de montage pour monter un composant de suspension sur un essieu asymétrique (26; 28) comprenant un boîtier différentiel (52) ayant un axe central (D), l'ensemble de montage comprenant:
des premier et deuxième dispositifs de fixation d'essieu (46; 48) montés sur l'essieu asymétrique (26; 28) sur les côtés opposés de l'axe central (D) respectivement, les premier et deuxième dispositifs de fixation d'essieu (46; 48) comprenant chacun:
des plaques latérales de compression (58; 62) et de tension (60; 64) disposées parallèlement entre elles et chacune des plaques latérales de compression et de tension ayant des parties supérieure (82, 86; 90, 94) et inférieure (84, 88; 92, 96), chacune des parties supérieure et inférieure comprenant un bord proximal (136, 138, 140, 142; 144, 146, 148, 150) orienté vers l'axe central (D) et un bord distal (110, 112; 114, 116) orienté à distance de l'axe central (D);
**caractérisé en ce que** chacun des premier et deuxième dispositifs de fixation d'essieu comprend:
i) des premier (66; 76) et deuxième (70; 80) appendices s'étendant à partir des bords distaux (110, 112; 114, 116) des parties inférieures (84, 88; 92, 96) des plaques latérales de compression et de tension respectivement;
ii) des troisième (68; 74) et quatrième (72; 78) appendices s'étendant à partir des bords proximaux (138, 142; 146, 150) des parties inférieures (84, 88; 92, 96) des plaques latérales de compression (58; 62) et de tension (60; 64) respectivement; et
iii) une plaque interne (98; 100) assemblant les plaques latérales de compression et de tension et étant positionnée perpendiculairement aux plaques latérales de compression et de tension, chacune des plaques internes (98; 100) ayant une fente (160; 162) pour fixer le dispositif de fixation d'essieu (46; 48) respectif sur le composant de suspension de véhicule, chacune des fentes (160; 162) étant espacée à égale distance d'un centre de l'essieu (A).

9. Ensemble de montage selon la revendication 8, dans lequel:
a) chacun des bords proximaux des parties inférieures des plaques latérales de compression et de tension du deuxième dispositif de fixation d'essieu a une partie arquée, la partie arquée de la plaque latérale de compression du deuxième dispositif de fixation d'essieu ayant un rayon de courbure égal à un rayon de courbure de la partie arquée de la plaque latérale de tension du deuxième dispositif de fixation d'essieu;
b) chacun des bords distaux des parties inférieures des plaques latérales de compression et de tension a une partie arquée;
c) chacune des parties arquées des plaques latérales de compression des premier et deuxième dispositifs de fixation d'essieu est espacée selon une première distance des bords proximaux des plaques latérales de compression des premier et deuxième dispositifs de fixation d'essieu, respectivement;
d) chacune des parties arquées des bords distaux des plaques latérales de tension des premier et deuxième dispositifs de fixation d'essieu est espacée selon une deuxième distance des bords proximaux des plaques latérales de tension des premier et deuxième dispositifs de fixation d'essieu, respectivement; et
e) la première distance est inférieure à la deuxième distance.

10. Ensemble de montage selon la revendication 9, dans lequel, chacun des premiers appendices (66; 76) des premier et deuxième dispositifs de fixation d'essieu (46; 48) comprend une première section (118; 120) s'étendant à partir du bord distal (110; 114) de la partie inférieure (84; 92) de sa plaque latérale de compression (58; 62) respective, une deuxième section (126; 128) s'étendant à partir de sa première section (118; 120) respective et s'incurvant vers son deuxième appendice (70; 80) respectif, et une troisième section (122; 124) s'étendant à partir de sa deuxième section (126; 128) respective, et la troisième section (122; 124) est raccordée à son deuxième appendice (70; 80) respectif adjacent à son extrémité, et est approximativement perpendiculaire à sa première section (118; 120) respective et son deuxième appendice (70; 80) respectif.

11. Ensemble de montage selon la revendication 10, dans lequel le troisième appendice (74) du deuxième dispositif de fixation d'essieu (48) comprend:
une première section (130) s'étendant à partir du bord proximal (146) de la partie inférieure (92) de la plaque latérale de compression (62) du deuxième dispositif de fixation d'essieu (48),
une deuxième section (134) s'étendant à partir de la première section (130) du troisième appendice (74) du deuxième dispositif de fixation d'essieu (48) et s'incurvant vers la plaque latérale de tension (64) du deuxième dispositif de fixation d'essieu (48), et
une troisième section (132) s'étendant à partir de la deuxième section (134) du troisième appendice (74) du deuxième dispositif de fixation d'essieu (48), la troisième section (132) du troisième appendice (74) est raccordée au quatrième appendice (78) du deuxième dispositif de fixation d'essieu (48) adjacent à son extrémité et est approximativement perpendiculaire à la première section (130) du troisième appendice (74) du deuxième dispositif de fixation d'essieu (48) et le quatrième appendice (78) du deuxième dispositif de fixation d'essieu (48), et dans lequel les troisième (68) et quatrième (72) appendices du premier dispositif de fixation d'essieu (46) s'étendent parallèlement entre eux.

12. Ensemble de montage selon la revendication 11, dans lequel chacune des plaques internes (98; 100) des premier et deuxième dispositifs de fixation d'essieu (46; 48) a une partie supérieure (102; 106) et une partie inférieure (104; 108), chacune des parties supérieures comprend une extrémité en forme de fourche définissant la fente (160; 162), chacune des fentes (160; 162) a une extrémité ouverte (164; 166) et une extrémité fermée (168; 170), chacune des extrémités fermées est disposée plus à proximité de sa plaque latérale de tension (60; 64) respective que de sa plaque latérale de compression (58; 62) respective.

13. Ensemble de montage selon la revendication 12, dans lequel chacune des parties supérieures (102; 106) des plaques internes (98; 100) est fixée aux plaques latérales de compression et de tension adjacentes aux bords proximaux (136, 140; 144, 148) des parties supérieures (82, 86; 90, 94) des plaques latérales de compression et de tension, et dans lequel les fentes des premier et deuxième dispositifs de fixation d'essieu (46; 48) sont espacées à égale distance d'un centre de l'essieu (A).

14. Ensemble de montage selon la revendication 13, dans lequel la partie inférieure (104) de la plaque interne (98) du premier dispositif de fixation d'essieu (46) est inclinée par rapport à la partie supérieure (102) de la plaque interne du premier dispositif de fixation d'essieu (46).

15. Ensemble de montage selon la revendication 14, dans lequel les premier (66) et deuxième (70) appendices du premier dispositif de fixation d'essieu (46) s'étendent sur une troisième distance le long de l'essieu (26) et les premier (76) et deuxième (80) appendices du deuxième dispositif de fixation d'essieu (48) s'étendent sur une quatrième distance le long de l'essieu, la troisième distance étant inférieure à la quatrième distance, et dans lequel les troisième (68) et quatrième (72) appendices du premier dispositif de fixation d'essieu (46) s'étendent sur une cinquième distance le long de l'essieu et les troisième (74) et quatrième (78) appendices du deuxième dispositif de fixation d'essieu (48) s'étendent sur une sixième distance le long de l'essieu, la cinquième distance étant inférieure à la sixième distance.

16. Système de suspension pour supporter un châssis de véhicule comprenant des premier (18) et deuxième (20) rails de cadre s'étendant longitudinalement et transversalement espacés, sur un essieu (26; 28) s'étendant de manière transversale, comprenant un axe central (A), le système de suspension (22; 24) comprenant:
a) une traverse (21; 23) s'étendant de manière transversale entre et raccordée aux premier (18) et deuxième (20) rails de cadre;
b) un composant de suspension multifonction (42) raccordé, au niveau d'une extrémité, à la traverse (21; 23) et raccordé, au niveau de l'autre extrémité, aux premier et deuxième dispositifs de fixation d'essieu (46; 48); et
c) les premier et deuxième dispositifs de fixation d'essieu (46; 48) étant espacés de manière transversale et fixés à l'essieu (26; 28) au niveau des côtés opposés de l'axe central (A), les premier et deuxième supports d'essieu (46; 48) comprenant chacun:
des plaques latérales de compression (58; 62) et de tension (60; 64) longitudinalement espacées et parallèles entre elles, chacune des plaques latérales de compression et de tension ayant des parties supérieure (82, 86; 90, 94) et inférieure (84, 88; 92, 96), chacune des parties supérieure et inférieure ayant un bord proximal (136, 138, 140, 142; 144, 146, 148, 150) orienté vers l'axe central (A) et un bord distal (110, 112; 114, 116) orienté à distance de l'axe central (A);
**caractérisé en ce que** chacun des premier et deuxième dispositifs de fixation d'essieu comprend:
i) des premier (66; 76) et deuxième (70; 80) appendices s'étendant à partir des bords distaux (110, 112; 114, 116) des parties inférieures (84, 88; 92, 96) des plaques latérales de compression (58; 62) et de tension (60; 64) respectivement;
ii) des troisième (68; 74) et quatrième (72; 78) appendices s'étendant à partir des bords proximaux (138, 142; 146, 150) des parties inférieures (84, 88; 92, 96) des plaques latérales de compression et de tension respectivement; et
iii) une plaque interne (98; 100) assemblant les plaques latérales de compression et de tension et positionnée perpendiculairement aux plaques latérales de compression et de tension, chacune des plaques internes (98; 100) ayant une fente (160; 162) pour fixer le dispositif de fixation d'essieu (46; 48) respectif au composant de suspension multifonction (42), les fentes (160; 162) des premier et deuxième dispositifs de fixation d'essieu (46; 48) étant à égale distance de l'axe central (A).

17. Système de suspension selon la revendication 16, dans lequel:
a) chacun des bords distaux (110, 112; 114, 116) des parties inférieures (84, 88; 92, 96) des plaques latérales de compression et de tension a une partie arquée;
b) chacune des parties arquées des plaques latérales de compression (58; 62) des premier et deuxième dispositifs de fixation d'essieu (46; 48) est espacée selon une première distance des bords proximaux (138; 146) des plaques latérales de compression (58; 62) des premier et deuxième dispositifs de fixation d'essieu (46; 48) respectivement;
c) chacune des parties arquées des bords distaux (112; 116) des plaques latérales de tension (60; 64) des premier et deuxième dispositifs de fixation d'essieu (46; 48) est espacée selon une deuxième distance des bords proximaux (142; 150) des plaques latérales de tension (60; 64) des premier et deuxième dispositifs de fixation d'essieu (46; 48) respectivement; et
d) la première distance est inférieure à la deuxième distance.

18. Système de suspension selon la revendication 17, dans lequel chacun des premiers appendices (66; 76) des premier et deuxième dispositifs de fixation d'essieu (46; 48) comprend des première (118; 120), deuxième (126; 128) et troisième (122; 124) sections, chacune des premières sections (118; 120) s'étend à partir de ses bords distaux (110; 114) respectifs, chacune des deuxièmes sections (126; 128) s'étend à partir de ses premières sections (118; 120) respectives et s'incurve vers sa plaque latérale de tension (60; 64) respective, et chacune des troisièmes sections (122; 124) s'étend à partir de sa deuxième section (126; 128) respective et se raccorde à son deuxième appendice (70; 80) respectif adjacent à son extrémité et chacune des troisièmes sections (122; 124) est positionnée approximativement perpendiculairement à sa première section (118; 120) respective et son deuxième appendice (70; 80) respectif.

19. Système de suspension selon la revendication 18, dans lequel le troisième appendice (74) du deuxième dispositif de fixation d'essieu (48) comprend:
une première section (130) s'étendant à partir du bord proximal (146) de la partie inférieure (92) de la plaque latérale de compression (62) du deuxième support d'essieu (48),
une deuxième section (134) s'étendant à partir de la première section (130) du troisième appendice (74) du deuxième dispositif de fixation d'essieu (48) et s'incurvant vers la plaque latérale de tension (64) du deuxième dispositif de fixation d'essieu (48), et
une troisième section (132) s'étendant à partir de la deuxième section (134) du troisième appendice (74) du deuxième dispositif de fixation d'essieu (48) et la troisième section (132) du troisième appendice (74) du deuxième dispositif de fixation d'essieu (48) est raccordée au quatrième appendice (78) du deuxième dispositif de fixation d'essieu (48) adjacent à son extrémité et est positionnée approximativement perpendiculaire à la première section (130) du troisième appendice (74) du deuxième dispositif de fixation d'essieu (48) et au quatrième appendice (78) du deuxième dispositif de fixation d'essieu (48).

20. Système de suspension selon la revendication 19, dans lequel:
a) chacune des plaques internes (98; 100) a une partie supérieure (102; 106) et une partie inférieure (104; 108), chacune des parties supérieures comprend une extrémité en forme de fourche définissant la fente (160; 162), chacune des fentes (160; 162) a une extrémité ouverte (164; 166) et une extrémité fermée (168; 170), chacune des extrémités fermées est disposée plus à proximité de sa plaque latérale de tension (60; 64) respective que de sa plaque latérale de compression (58; 62) respective; et
b) les parties supérieures (102; 106) des plaques internes (98; 100) des premier et deuxième dispositifs de fixation d'essieu (46; 48) sont fixées aux plaques latérales de compression et de tension des premier et deuxième dispositifs de fixation d'essieu respectifs adjacents aux bords proximaux (136, 140; 144, 148) des parties supérieures (82, 86; 90, 94) des plaques latérales de compression et de tension.
